# EUROPEAN PATENT APPLICATION

(11) **EP 4 245 798 A1**
(43) Date of publication of application: **20.09.2023**
(21) Application number: 22305310.9
(22) Date of filing: 16.03.2022
(51) Int. Cl.: C08J 7/02, B81C 1/00, C08J 7/04, C08L 33/12, C08L 69/00

(54) **PROCESS FOR THE SURFACE MODIFICATION OF A POLYMER SUBSTRATE BY FORMATION OF NANOPILLARS**

(71) Applicant: Université de Pau et des Pays de l'Adour, 64000 Pau (FR); Centre national de la recherche scientifique, 75016 Paris (FR)
(72) Inventor: MARCASUZAA, Pierre, 64140 LONS (FR); BILLON, Laurent, 64110 SAINT-FAUST (FR); BOUSQUET, Antoine, 64450 NAVAILLES-ANGOS (FR)
(74) Representative: Lavoix

(57) **Abstract**

The present invention relates to a process for the surface modification of a polymer substrate comprising:
- a step for contacting a solution with the surface of a substrate made of a polymer A, said solution comprising a solvent S and a polymer B, whereby a ternary blend comprising the solvent S, the polymer A, and the polymer B is obtained, and is present on top of the surface of the polymeric substrate,
- a step for eliminating the solvent S from the ternary blend as obtained above, whereby the surface of the polymer substrate is modified and is made of a micro-phased mixture of polymer A and of polymer B, and
- a step for eliminating the polymer B, in order to obtain a modified polymer substrate having nanopillars at its surface.

## Description

The present invention concerns a process for the surface modification of a polymer substrate by the formation of nanopillars on said surface, as well as a polymer substrate, having a modified polymeric surface comprising nanopillars.

Surfaces self-cleaning is an substantial challenge for lots of industrial domains like textile [2][3], building construction [4], solar cells [5-9], anti-icing [10,11] or anticorrosive properties [10,12]. Self-cleaning can be obtained by using a molecule able to deteriorate pollutant or dirty species by chemical process [9,13], but the main strategy developed to target this property is the formation of super hydrophobic surfaces combining high value of contact angle with water and low value of sliding angle [5]. This strategy is inspired by nature as lotus leaf effect [14-18]. This natural structuration is described as Cassie Baxter model which defines the contact angle of a rough surface as a function of the surface ratio and the Young angle (contact angle of the equivalent continuous film) of the material. Super hydrophobic surfaces can be obtained by combination of high roughness to decrease the surface in contact with water, with a high Young angle that can be enhanced by the presence of hydrophobic species at the surface. These hydrophobic species can be brought directly by the material or by post grafting of a fluorinated molecule [19,20]. To obtain these properties, a combination of polymers and inorganic particles is mainly used with different casting process, such as dip-coating, chemical or electro chemical deposition, layer by layer self-assembly [5], spray coating, spin coating, electrospinning coating, chemical etching or lithographic technics. To maximize the effect, hierarchically structured surface are often used. The characteristic of this kind of morphology is to present different levels of structuration at different scales leading to an important enhancement of properties due to a drastic decrease of surface ratio [21].

Nano pillars formation at substrate surface is an important challenge for a large field of application [22,23,32-37,24-31] like wettability properties, anti-adhesion, anti-reflective or friction reduction in fluids. Various strategies are used to develop this morphology such as the coating of particles at surface, the use of stamp template to transfer the structuration to the surface or lithography. Regarding the particle coating [38,39], independently of organic (latex) or inorganic (metal oxide) composition, two different routes are developed, the first one is to use the hexagonal structuration of sphere leading to a pillar formation and the second one is to use particle as mask to etch the substrate. According to the particle composition and the etching selectivity of plasma, pillars morphology can be transferred to the substrate taking place of previous particle position playing a mask role. Concerning the use of a stamp as negative template, the mains materials used are PDMS or anodic alumina oxide (AAO) [29,32]. In case of PDMS, the stamp is molded on a desired template by casting a low viscosity pre-polymer and cross linker mixture to obtain an effective penetration. After drying and crosslinking, the PDMS is separated from the template leading to a structured PDMS which can be used as a stamp to transfer the structure to a substrate. For AAO, the porous film is firstly obtained by classic anodic deposition of alumina oxide and then used as a stamp. This approach requires an electron-conductive substrate, out of the scope of the polymeric surfaces. Lithography can be also used to obtain pillars at surface. In that case, a mask is placed between the beam and the substrate to give the desire shape at the surface. Whatever the strategy used, pillars formation is obtained by a difference of treatment between the pillars part and the valley between pillars. Another strategy to target this morphology is to use sacrificial phase polymer. Jang-Joo and co-workers [40] used a blend of polystyrene (PS) and poly(methyl methacrylate) (PMMA) casted on glass substrate leading to a macro phase separation. Then, PMMA pillars were revealed by selective solubilization of the PS domains by cyclohexane. Solvent selectivity is not the only way to selectively remove a phase. Sacrificial part can be removed by thermal treatment [41], chemical degradation [42] or selective etching (UV or plasma) [43-46].

The aim of the present invention is to provide a process for the surface modification of a substrate being cheap and easy to be implemented.

Another aim of the present invention is to provide a process for obtaining a substrate wherein the modification is made in the bulk and is part of the substrate, and thus is not in the form of a further superficial layer formed on said substrate.

Another aim of the present invention is to provide a process involving green solvents.

Another aim of the present invention is to provide a polymer substrate having a modified polymeric surface and wherein the original transparency properties of the substrate are maintained.

Another aim of the present invention is to provide a polymer substrate with increased hydrophobicity and oleophobicity by providing roughness/structuration and hydrophobic/oleophobic chemical functions at the surface while maintaining its transparency if necessary.

Another aim of the present invention is to provide a polymer substrate the transparency or the visual aspect of which being maintained despite all modifications made at the surface, keeping the size of the structuration out of the visible interference.

Therefore, the present invention relates to a process for the surface modification of a polymer substrate comprising:
- a step for contacting a solution with the surface of a substrate made of a polymer A, said solution comprising a solvent S and a polymer B,
   wherein the solvent S is able to solubilize both polymers A and B,
   wherein polymers A and B are not miscible with each other,
   wherein the difference between the solubility parameter of the polymer A (δ_{A}) and the solubility parameter of the polymer B (δ_{B}) is comprised from 0 to 10,
   whereby a ternary blend comprising the solvent S, the polymer A, and the polymer B is obtained, and is present on top of the surface of the polymeric substrate,
- a step for eliminating the solvent S from the ternary blend as obtained above, whereby the surface of the polymer substrate is modified and is made of a micro-phased mixture of polymer A and of polymer B, and
- a step for eliminating the polymer B, in order to obtain a modified polymer substrate having nanopillars at its surface, said nanopillars being made of polymer A and having a diameter comprised from 10 nm to 5 µm.

The surface to be modified by the process according to the invention is a surface of a substrate made of a polymer A.

The solution used for the step for contacting said solution with the surface of the substrate comprises both polymer B and solvent S.

As mentioned above, polymers A and B are not miscible with each other. Therefore, it means that the amount (in mass) of polymer A able to be solubilized in polymer B is less than or equal to 5%, preferably 1%, preferentially 0,5%, relative to the total mass of polymer B, and that the amount (in mass) of polymer B able to be solubilized in polymer A is less than or equal to 5%, preferably 1%, preferentially 0,5%, relative to the total mass of polymer A.

According to the invention, the solvent S solubilizes both polymers A and B.

Therefore, the difference between the solubility parameter of the polymer A (δ_{A}) and the solubility parameter of the polymer B (δ_{B}) is comprised from 0 to 10, preferably from 0.5 to 5 and more preferably from 1 to 3,

According to the invention, the solubility parameter of a polymer (δ_{A} or δ_{B}) provides a numerical estimate of the degree of interaction between materials and can be a good indication of solubility, particularly for nonpolar materials such as many polymers. Materials with similar values of δ are likely to be miscible.

As polymer A, the following polymers may be mentioned: polycarbonate (PC), poly(methyl methacrylate) (PMMA), and polystyrene (PS).

As polymer B, the following polymers may be mentioned: poly(methyl methacrylate) (PMMA), polylactic acid (PLA), and polystyrene (PS).

As solvent S, the following solvents may be mentioned: propylene glycol methyl ether acetate (PGMEA), and toluene.

According to an embodiment of the process according to the invention, the polymer A is polycarbonate and the polymer B is poly(methyl methacrylate).

According to an embodiment of the process according to the invention, the polymer A is poly(methyl methacrylate) and the polymer B is polycarbonate.

According to an embodiment of the process according to the invention, the polymer A is polycarbonate and the polymer B is polylactic acid.

According to an embodiment of the process according to the invention, the polymer A is polylactic acid and the polymer B is polycarbonate.

According to an embodiment of the process according to the invention, the polymer A is polystyrene and the polymer B is poly(methyl methacrylate).

According to an embodiment of the process according to the invention, the polymer A is poly(methyl methacrylate) and the polymer B is polystyrene.

According to an embodiment, the step for contacting the solution with the substrate surface is carried out by any conventional coating technics and more preferably spin coating deposition, dip coating deposition, or blade coating deposition.

Spin coating deposition consists in casting a solution onto a surface and applying a rotation to the substrate in order to control the casted amount which is directly linked with the concentration, the speed of rotation or the time of rotation.

Dip coating deposition consists in dipping a surface directly in a solution and withdrawing it. Thus, a layer of solution is casted on the surface. Thus, the casted amount is mainly function of the concentration, the withdraw speed and the interaction between the surface and the solvent.

Blade coating deposition consists in applying a wished wet thickness on a substrate using a blade with a specific thickness. Thus, the final deposit amount is mainly dependent of the concentration and the blade thickness.

According to an embodiment, the concentration of the polymer B in the solution is comprised from 0.1% to 20%, preferably from 1% to 10%, and more preferably from 3% to 8%, by weight in relation to the total weight of the solution.

According to an embodiment, the duration of the step for contacting the solution with the substrate surface is comprised from 1 second to 30 minutes, preferably from 30 seconds to 10 minutes, and more preferably from 1 minute to 5 minutes.

This first step of contacting the above-defined solution with the substrate surface as defined above gives a ternary blend comprising the solvent S, the polymer A, and the polymer B, said ternary blend being present on top of the surface of the polymeric substrate.

After this contacting step, a step for eliminating the solvent S from the ternary blend is carried out. This step leads to a modification of the surface of the polymer substrate as defined above, said surface being thus made of a micro-phased mixture of polymer A and of polymer B. This micro-phase mixture is due to the non-miscibility of polymer A and of polymer B.

According to an embodiment, the step for eliminating the solvent S is carried out by heating and/or drying in vacuum the ternary blend.

Preferably, the ternary blend is heated at a temperature comprised from 20°C to 150°C.

According to an embodiment, the duration of the step for eliminating the solvent S is comprised from 30 seconds to 24 hours, preferably from 1 minute to 12 hours, and more preferably from 10 minutes to 5 hours.

Then, a step for eliminating the polymer B is carried out.

The elimination of the polymer B leads then to a modified polymer substrate having nanopillars at its surface, said nanopillars being made of polymer A and having a diameter comprised from 10 nm to 5 µm, preferably from 50 nm to 2 µm, and more preferably from 100 nm to 1 µm.

According to the invention, a nanopillar refers to a 3D object on the top of the surface with a bump or cylindrical shape. This kind of object can be easily observed by AFM analysis which gives different geometrical parameters as the diameter, the distance between two pillars, and the height of the pillar.

According to an embodiment, the step for eliminating the polymer B is carried out by a washing step, or by the combination of an etching step and a washing step, said etching step being preferably carried out by ultraviolet and ozone treatment. The sample is deposited in the treatment chamber and ultraviolet or ozone is applied for the desired time. Then, a washing step with a non-solvent of polymer A and a good solvent of destroyed residue of polymer B is done by dipping or rinsing the sample.

According to an embodiment, the duration of the step for eliminating the polymer B is comprised from 1 second to 12 hours, preferably from 1 minute to 4 hours, and more preferably from 10 minutes to 40 minutes.

According to an embodiment, the nanopillars obtained at the surface of the polymer substrate have a height comprised from 10 nm to 10 µm, preferably from 30 nm to 5 µm, and more preferably from 50 nm to 1 µm. This parameter is measured by AFM.

According to an embodiment, the mean distance between the nanopillars obtained at the surface of the polymer substrate is comprised from 20 nm to 10 µm, preferably from 50 nm to 50 µm, and more preferably from 100 nm to 1 µm. This parameter is measured by AFM.

The process of any one of claims 1 to 14, wherein the surface ratio of the nanopillars obtained at the surface of the polymer substrate is comprised from 0.05 to 0.95, preferably from 0.1 to 0.7, and more preferably from to 0.15 to 0.3. This parameter is calculated from pillars diameter and the mean distance between.

According to an embodiment, the ratio d/h, corresponding to the ratio between the mean distance between the nanopillars obtained at the surface of the polymer substrate and the height of said nanopillars, is comprised from 0.1 to 20, preferably from 0.5 to 10, and more preferably from 1 to 5.

According to an embodiment, the process according to the invention as defined above further comprises a step of grafting in particular by processes from the existing literature with at least one hydrophobic and/or oleophobic molecule on the modified surface of the polymer substrate, in order to obtain a modified polymer substrate having enhanced hydrophobic and/or oleophobic surface properties. Such molecules bear classical and well-known anchoring groups as (tri/mono)chlorosilanes, trialkoxysilanes, thiols, disulfides, phosphonic acids, phosphonates... and are commercially available.

According to the invention, the term "hydrophobic molecule" refers in particular to alkane carbon chains (alkylated) or partially fluorinated carbon chains with the above-mentioned anchoring groups.

According to the invention, the term "oleophobic molecule" refers in particular to partially florinated or perfluorinated cabons chains with the above-mentioned anchoring groups.

The grafting step as mentioned above is carried out by any known method, and in particular dip-coating, spin-coating, CVD, or plasma deposition...

Thanks to this grafting step, the modified polymer substrate has enhanced hydrophobic and/or oleophobic surface properties in comparison with the substrate before the grafting.

According to the invention, having "enhanced hydrophobic and/or oleophobic surface properties" means that the contact angle values with a set of classical solvents (water, ethylene glycol, and hexadecane) are increased after the grafting.

According to an embodiment, the hydrophobic and/or oleophobic molecules are fluorinated molecules and/or alkylated molecules.

The process according to the invention is advantageous in that the visual properties such as the aspect or especially the transparency properties of the original substrate (that is to say of the substrate before the implementation of the process according to the invention) are maintained.

For example, when using transparent polycarbonate as polymer A, the modified substrate will still be transparent, and when using black polycarbonate as polymer A, the modified substrate will still be black.

The present invention also relates to a polymer substrate made of a polymer A, having a modified polymeric surface comprising nanopillars, said nanopillars being made of polymer A, wherein the nanopilllars have a diameter comprised from 10 nm to 5 µm, and a height comprised from 10 nm to 10 µm.

According to an embodiment, the polymer substrate further comprises grafted hydrophobic and/or oleophobic molecules at its surface, said molecules being as defined above.

### FIGURES

**Figure 1** represents a general scheme of the process according to the invention.
**Figure 2** represents a schema of the process of the invention carried out with PC and PMMA.
**Figure 3** represents AFM images for different morphologies obtained with various concentrations of PMMA in PGMEA: 2wt% (a); 3wt% (b); 5wt% (c) and 5wt% with annealing at 120°C for 10 minutes (d).
**Figure 4** represents the pillars diameter distribution for 3wt% (dotted line) and 5wt% (full line) solutions.
**Figure 5** represents the pillars distribution and size according to the time between deposition and spin coating, no delay (a), 30s (b), 60s (c) and 90s (d).
**Figure 6** concerns the ethanol washing effect.
**Figure 7** represents the ethanol washing effect on a sample partially masked during UV O₃ treatment.
**Figure 8** represents AFM images for a solution of PMMA at 5% with a 10 minutes annealing (left part), 7.5% in PGMEA with a 10 minutes annealing (center part) and 3h annealing (right part).
**Figure 9** represents AFM images for the effect of the time before annealing.
**Figure 10** represents AFM images when using dip coating and Dr Blade deposition.
**Figure 11** represents treated surfaces with 5 wt% solution of PMMA in PGMEA for nano pillars formation

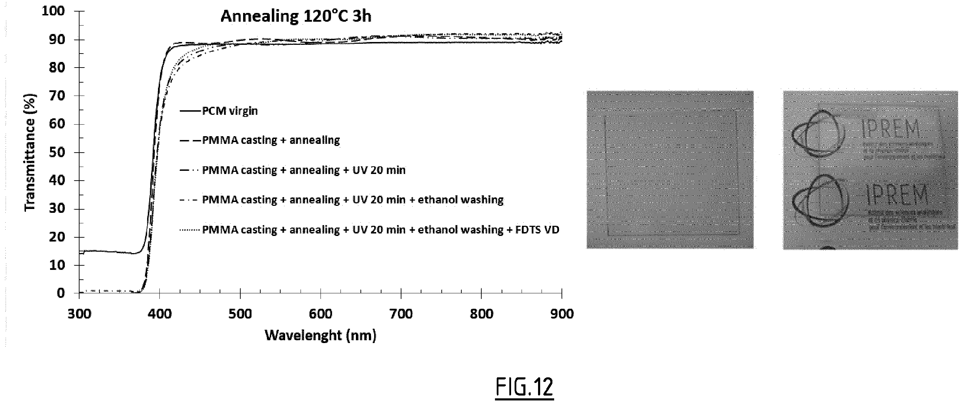

**Figure 12** concerns the transparency of a sample according to different steps from a 7.5wt% PMMA in PGMEA solution casting on PC.

### EXAMPLES

As explained above, the present invention aims to obtain some nano pillars directly from the top of a polymeric surface.

The present invention involves the use of the partial/low solubility of the polymeric substrate A by a casted polymer B solution. Indeed, the solvent contained in the polymer B solution slightly swells the polymer substrate A. Thus, the polymer B solution is then enriched in polymer A leading to a polymeric blend solution of A+B on top of the polymeric A surface. In the meantime, the second polymer B introduced *via* the solvent, is non-miscible with A to provide a microphase segregation after solvent evaporation. At the end, the sacrificial polymer B phase is erased by washing/etching and the surface is only constituted of a patterned substrate of the polymer A directed by the *in situ* polymer A+B blend. Even if the morphologies obtained cannot be compared to the ones obtained by self-assembly of diblock copolymer in terms of dimensions and ordered patterns, a bi-phasic polymer distribution in the dry surface is observed where the matrix is composed of the major polymer present in the polymeric blend solution.

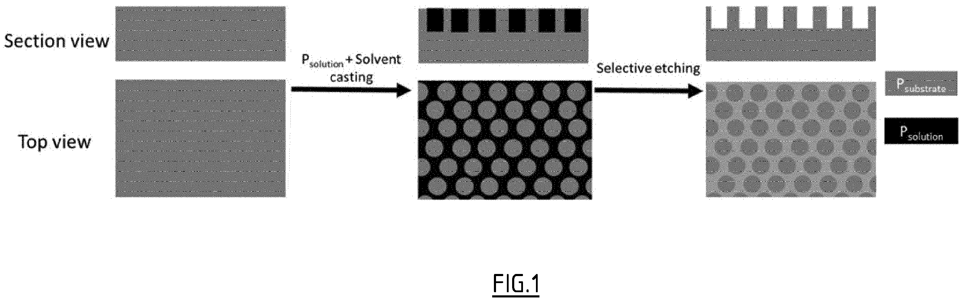

As shown in Figure 1, the methodology is based on the casting of a sacrificial polymer (Poly B or P_{Sacrificial}) in solution onto the substrate, and the fact that the solvent is able to partially solubilize the surface of the substrate leads to a ternary blend (solvent, P_{substrate}, P_{Sacrificial}). After solvent removing, the surface of the substrate is now composed of a micro-phased mixture of P_{Sacrificial} and P_{Subtrate}. To recover the nano pillars (macro-phase segregation), some important aspects have to be respected:
➢ The initial solvent should be able to solubilize both PolyA/P_{substrate}, partially with time or solubility parameter control, and PolyB/P_{Sacrificial}
➢ PolyB/P_{Sacrificial} and PolyA/P_{substrate} have to be immiscible enough to obtain macro phase separation after solvent evaporation (dry state)
➢ PolyB/P_{sacrificial} has to be used as a sacrificial compound (selective washing/etching), leading to the anchorage of the macro-phased structuration of PolyA/P_{Substrate} into the substrate A.

Following these three conditions, the global process to obtain nano pillars A at the surface of the substrate A is easy to handle (Figure 1) and can be applied to a large range of polymer substrates.

The solution of PolyB/P_{Sacrificial} with desired concentrations is casted onto the substrate driving the final macro-phase separation as the time before casting. Then, the system is dried and/or annealed during the required time. The last step consists of removing of the sacrificial polymer to create the desired pattern. In fact, PolyB/P_{Sacrificial} is just used as an intermediary compound which is introduced and removed from the surface, *i.e.* sacrificial polymer, leading to a final surface with the same chemical composition than the initial substrate. Pillars are not obtained as an additional top layer on the substrate but directly tailored from the substrate. However, each step needs to be well-controlled and plays a primordial role for the pattern geometry.

In a final step, after washing/etching of the sacrificial polymer, hydrophobic or/and oleophobic molecules are grafted at the patterned polymer surface to enhance the hydrophobic or/and oleophobic surface properties.

### EXAMPLE 1: PolyCarbonate/PMMA couple in Propylene glycol methyl ether acetate (PGMEA)/PMMA solution: a model study.

Polycarbonate (PC) is a very common polymer mainly used to build automotive parts due to good mechanical properties and low cost. Following the three rules presented above:
➢ PGMEA (solubility parameter = 18.3 MPa^{1/2}) is a solvent (REACH compatible) able to solubilize both PMMA and Polycarbonate.
➢ The solubility parameters determined by Krevelen model for PC and PMMA are 20.7 and 19.0 MPa respectively. Therefore, a macro phase separation can be obtained if these two polymers are mixed.
➢ Due to the etching selectivity of PMMA under ultraviolet and ozone treatment (UV-O₃), PMMA will be removed, leading to a textured PC surface.

### 1. Nanopillar formation

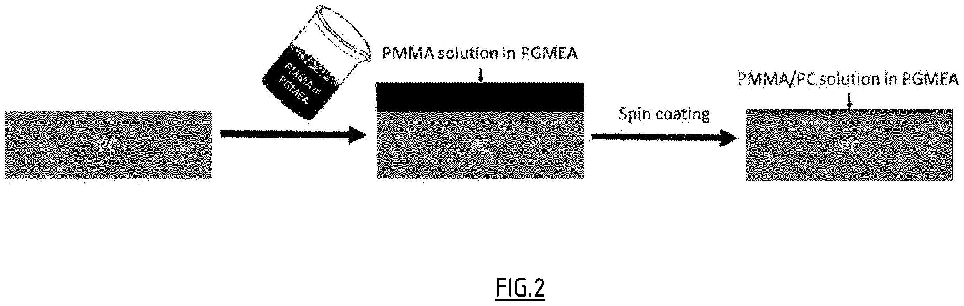

Herein, the strategy is to directly cast the PMMA solution in PGMEA (Polymer B solution) onto PC substrate (Polymer A) to quickly solubilize it (during about a minute) before spin coating. Then, the resulting surface solution is a blend of PMMA, PGMEA and minute solubilized PC. First of all, spin coating deposition was used as a way to cast a thin layer of the PGMEA solution on the substrate surface (see Figure 2). In fact, the combination of the PGMEA high boiling point (146°C) and the low vapor pressure at 25°C (3.8torr) leads to a non-drying of the solvent during spin coating (2000rpm during 60s). This condition is an important parameter to avoid the solubilization of a too important thickness of PC (PolyA/P_{Substrate}) leading to an important whitening of the surface (and so decrease of transparency). Then the PMMA phase is etched by the UV-O₃ treatment.

### 1.1. Effect of PMMA concentration

A first series of trials consisted in varying the concentration of PMMA in PGMEA.

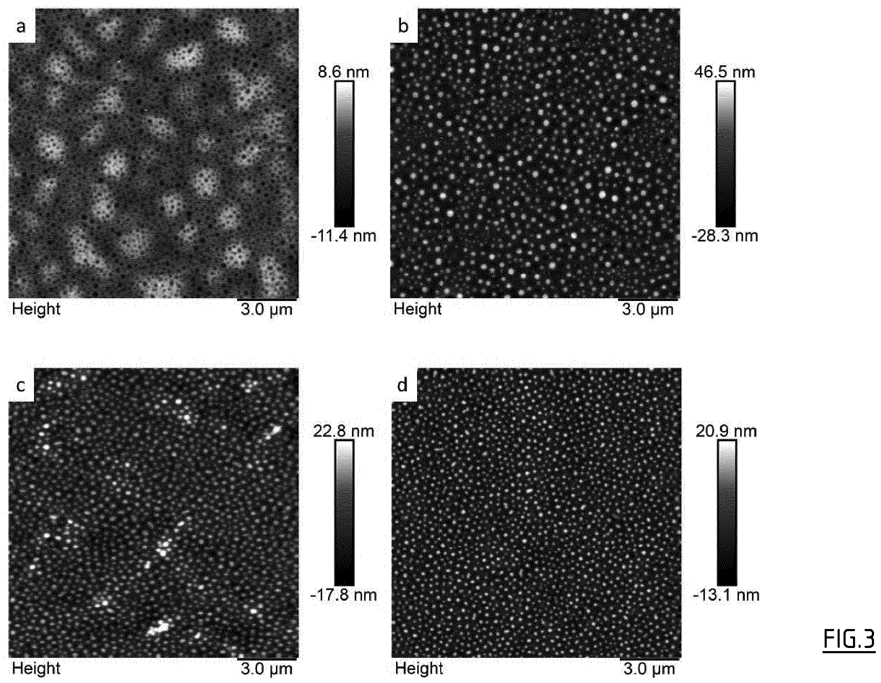

Figure 3 presents AFM images obtained for 2, 3 and 5 wt % concentrations of PMMA in PGMEA, spin coated on PC substrate at 2000 rpm during 60s and further treated by UV O₃ during 10 minutes with the goal to selectively etch PMMA (Figure 3a to Figure 3c).

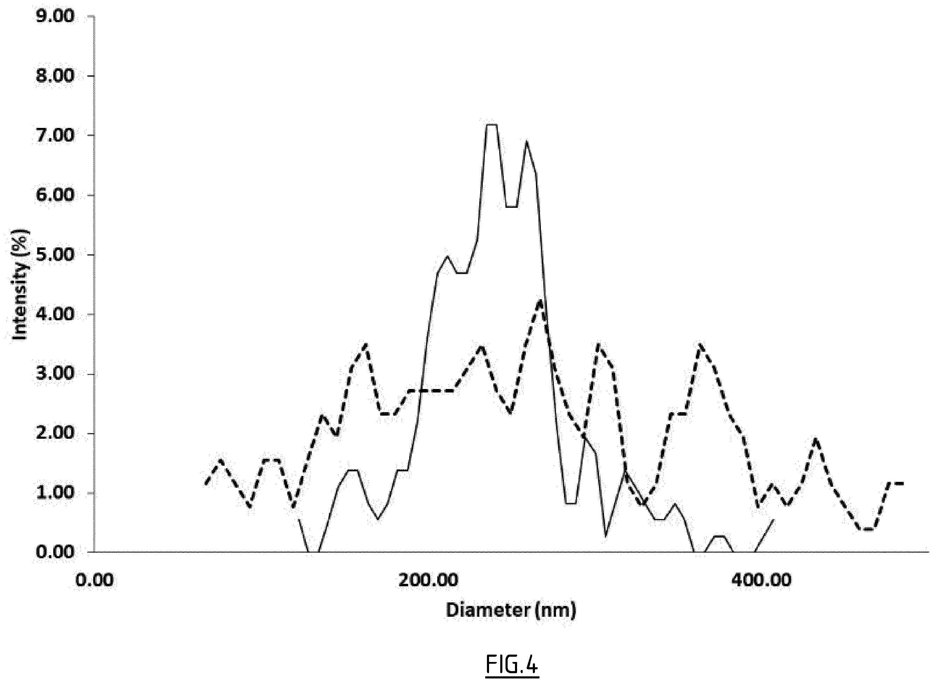

Two different behaviors are observed. The first one, for a solution at 2 wt%, a porosity is observed with an average distance between centers of pores (holes) of 350 nm (Figure 3a) while pillars are observed for 3 and 5 wt% with an average distance between pillars of 550 and 400 nm respectively (Figure 3b and 3c respectively). The difference is due to the variation of the ratio PC/PMMA in the surface blend after partial solubilization of the PC substrate. For a 2 wt% solution of PMMA in PGMEA, after solubilization of PC from substrate, PMMA corresponds to the minor phase of the blend leading to the formation of PMMA domains in a PC matrix. As a consequence, PMMA etching results in holes formation. For 3 and 5 wt%, after solubilization of PC from substrate, PMMA is the main phase of the film leading to PC domains stabilized in PMMA matrix. This time, after etching of PMMA, a pillared structure is obtained where pillars are constituted of PC. Moreover, a clear difference in the pattern is observed. For 3 wt% solution, pillars with a large dispersity of diameter was obtained, while more regular organization was obtained with 5 wt% solution of PMMA with a lower diameter dispersity value (Figure 4). The AFM image in Figure 3d corresponds to the casting of a solution at 5 wt% of PMMA in PGMEA on a PC substrate with an annealing at 120°C during 10 minutes prior to the UV O₃ treatment. The effect of the annealing is a decrease of the distance between pillars from 400 nm to 350 nm and pillars diameter from 230 nm to 190 nm. For the following, this last condition will be considered as a reference to obtain pillared surface.

### 1.2. Solubilization time: delay between solution casting and spin coating

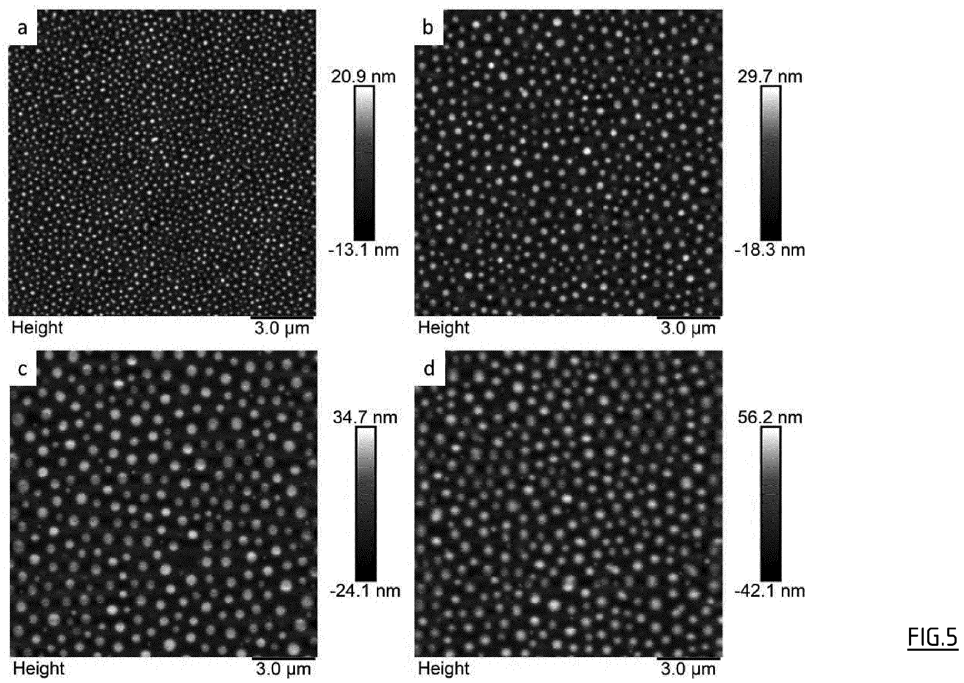

The waiting time between the casting and the spin coating is an important parameter that can strongly affect the Polymer A (PC) solubility and then the morphology. Indeed, the process includes a solubilization of the substrate which is time-dependent: longer the delay, higher the depth of solubilized PC. Figure 5 presents the morphologies obtained with a delay of 2 seconds (Figure 5a), 30s (Figure 5b), 1 minutes (Figure 5c) and 1.5 minutes (Figure 5d). Then, the film is annealed 10 minutes at 120°C and treated under UV O₃ during 10 minutes. The increase of the delay between the casting and the spin coating leads to the formation of larger pillars in diameter but also to a higher distance between domains (Table 1). However, from 30 seconds of delay, even if the geometrical distance changes, it does not affect the surface ratio covered by pillars.

**Table 1. Impact of the delay between deposition and spin coating on pillars dimensions and distribution.**

| Delay | Distance between pillars (nm) | Pillars diameter (nm) | Height of pillars (nm) | Density (pillars/µm²) | Surface ratio |
|---|---|---|---|---|---|
| Few seconds | 350 | 190 | 16 | 7.4 | 0.21 |
| 30 s | 700 | 440 | 48 | 2.0 | 0.30 |
| 60 s | 830 | 530 | 55 | 1.4 | 0.31 |
| 90 s | 830 | 540 | 48 | 1.4 | 0.32 |

### 1.3. Optimization of the etching process

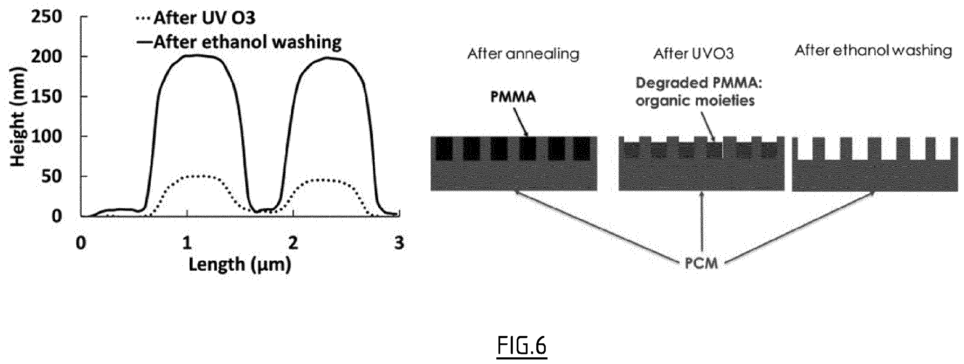

If the UV O₃ treatment time can have an effect on the pillars height to reach around 50 nm after 20 minutes, the main effect is the combination of UV O₃ etching and an ethanol washing. In fact, the UV irradiation allows to partially destroy the PMMA phase, but some residual organic components remain trapped on the top surface of the film (degradation species) that can be washed by ethanol. After cleaning with ethanol, the height of the pillars increases from 50 to 200 nm (Figure 6**Erreur ! Source du renvoi introuvable.).**

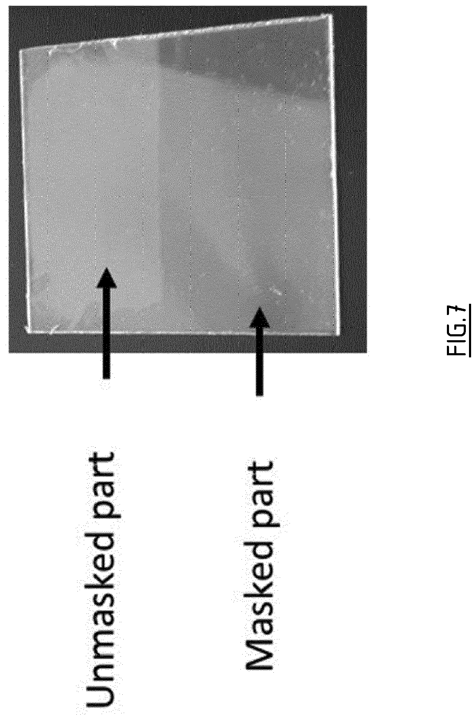

The synergy of UV O₃ etching and ethanol washing is proved by a test with a mask. PMMA solution was casted on the whole sample, but one part of the sample was covered during UV O₃ treatment and the total sample was washed with ethanol (Figure 7). This test revealed that the covered part is not etched (still transparent), thus ethanol washing only is not strong enough to remove neat PMMA, while a whitening appears on the unmasked part due to the pillars revelation (degradation of PMMA + washing).

### 1.4. Effect of polymer B concentration

The geometrical parameter of pillars has an important effect on wettability properties. Regarding Cassie-Baxter model, the main parameter is the surface ratio, corresponding to the area developed by the top of the pillars but also the ratio of the diameter and the height of the pillar: lower the ratio, better the property.

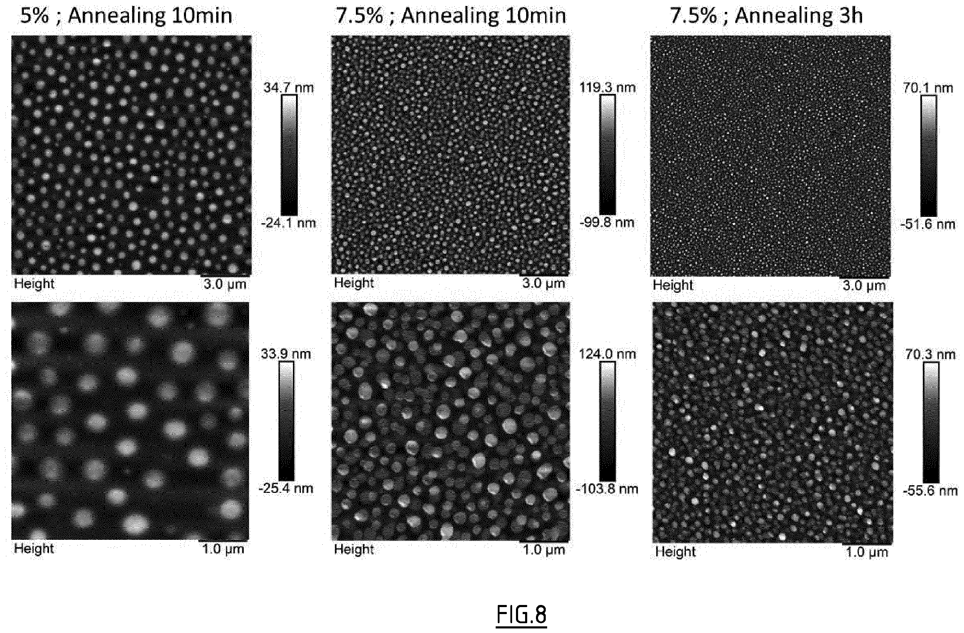

One parameter to tune the geometry is to adapt the concentration of PMMA in PGMEA. To show this effect, the inventors compared two initial PMMA solutions at 5 (Figure 8 left part) and 7.5 wt% (Figure 8 center part). The solution is casted on the substrate and spin coated with respect of a delay of 1 minute. Then, the dried sample is annealed 10 minutes at 120°C, etched under UV O₃ and washed with ethanol.

Table 2 presents the geometrical features of the pillars obtained by varying the concentration. The geometry of pillars varies in terms of distance between pillars, diameter and height of pillars, but regarding keys parameter, the surface ratio and the ratio *d*/*h,* the difference is not so important. Moreover, if the annealing time is increased to 3h, the surface ratio and the ratio *d*/*h* strongly decreases to reach respectively 0.21 and 1.6, respectively (Figure 8, right part).

**Table 2: Geometrical parameters**

| Sample | Distance between pillars (nm) | Pillars diameter (nm) | Height of pillars (nm) | Density (pillars/µm²) | Surface ratio | d/h |
|---|---|---|---|---|---|---|
| 5% | 830 | 530 | 200 | 1.4 | 0.31 | 2.6 |
| 7,5% 10 min | 430 | 230 | 100 | 7 | 0.33 | 2.3 |
| 7,5% 3h | 240 | 100 | 60 | 26.4 | 0.21 | 1.6 |

### 1.5. Effect of time between casting and annealing

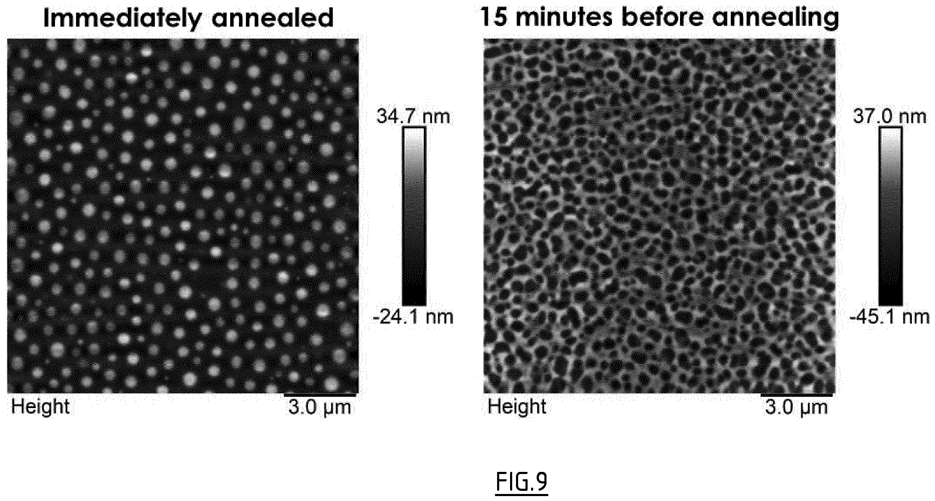

Moreover, it is important to take care of the time between the casting and the annealing. Indeed, all the process is based on the depth of solubilization of PC by PGMEA. Since the PGMEA is not completely evaporated after the spin-coating: the longer the contact time, the higher the amount of solubilized PC, leading to a change on the ratio PC/PMMA. For example, a delay of 15 minutes between the casting and the annealing for a solution of PMMA at 5 wt% in PGMEA leads to a phase inversion and the PMMA becomes the minor phase inducing the formation of a porous surface while pillars were obtained in case of minute annealing (Figure 9).

### 1.6. Other casting technics

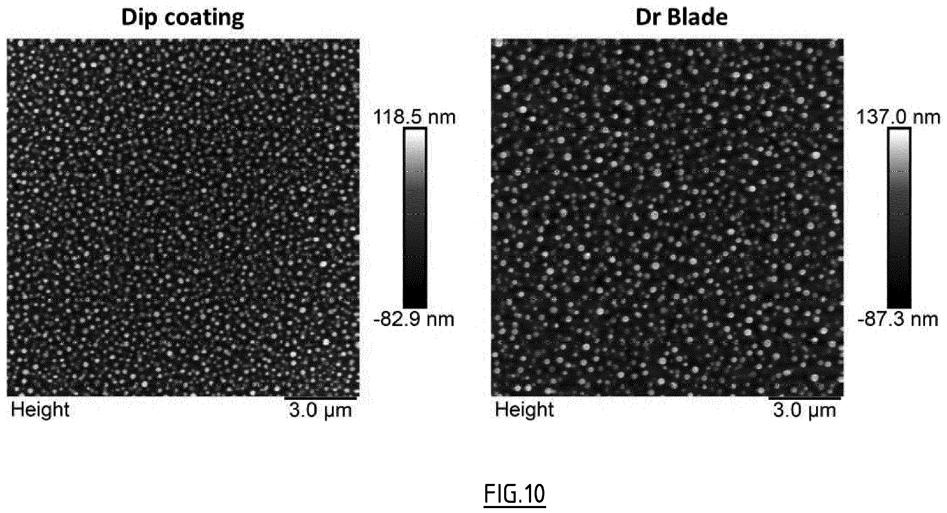

As it was mentioned previously, the process is based on the *in situ* blend PMMA/PC in PGMEA from a PC substrate and the control of the amount of PC solubilized related to the amount of PMMA initially introduced. If the spin coating is a good method to control the thickness of the casted layer, other technics can be used to obtain equivalent results such as dip coating, slot die, Dr Blade deposition and so on. For example, nano pillars were also obtained using a dip coating process or Dr Blade with a wet deposition thickness of 20 µm (Figure 10). In both cases, the substrate was annealed at 120°C during 10 minutes before 20 minutes of etching under UV O₃ and an ethanol washing.

### 1.7. Conclusion

Table 3 gives an overview of the geometrical features obtained according to casting conditions, that revealed the importance of the sacrificial polymer concentration to get pillars. Table 3 resumes also the influence of the contact time of PGMEA with the surface through the delay before spin coating (casting=>SC) and the delay before annealing (SC=>Annealing). Finally, the last point corresponds to the casting of an higher concentration at 7.5%, leading to smaller domains, and this effect is exacerbate by an increase of annealing time.

**Table 3. Surface ratio and d/h of different casting solution**

| **Conc** | **Delay Casting=>SC** | **Annealing time** | **Delay SC=>Annealing** | **Surface fraction** | **d/h** | **Comment** |
|---|---|---|---|---|---|---|
| 2wt% | 2 sec | NO annealing | No delay | N/A^{#} | N/A* | Pores |
| 3wt% | | | | 0.27 | | Not regular |
| 5wt% | | | | 0.24 | | Homogeneous |
| 5wt% | 2 sec | 10 min | No delay | 0.21 | N/A* | Not transparent |
| | 30 sec | | | 0.30 | N/A* | |
| | 60 sec | | | 0.31 | 2.6 | |
| | 90 sec | | | 0.32 | N/A* | |
| | 60 sec | | 15 min | N/A^{#} | | No pillars |
| 7.5wt% | 60 sec | 10 min | No delay | 0.33 | 2.3 | Transparent |
| | | 3h | | 0.21 | 1.6 | |
| | | 10 min | 15 min | N/A^{#} | | No pillars |

| | | | | | | |
|---|---|---|---|---|---|---|
| *Not available because of no ethanol washing; ^{#} Not available because of non-presence of pillars | | | | | | |

To conclude this part, the formation of pillars at PC surface is principally guided by the influence of the remaining time of PGMEA solution onto PC. Longer is the contact time, higher is the PC amount solubilized leading to a variation of PC pillars domain until the loss of pillars morphology when PC becomes the major phase. Thus, pillars can be obtained with different conditions leading to various geometrical features. Nevertheless, the transparency or the visual aspect of the sample is affected by light diffusion which can occur if the size of the pattern is in the range of visible light. However, by controlling the size of pillars, and more particularly by casting a 7.5wt% solution, pillars are small enough to avoid light diffusion and to keep the transparency/visual aspect of the polymeric substrate.

### 2. Hydrophobic/oleophobic coating

The improvement of wettability properties *ie.* hydrophobicity and oleophobicity is finally performed by grafting/deposition of a fluorinated molecule. This type of molecules is well known to be able to bring both properties in terms of wettability. Herein, the strategy is to use a fluorinated alkyl chain end-capped by a trichlorosilane function is highly reactive with hydroxyl function obtained after the UV etching.

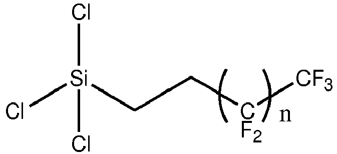

The procedure to functionalize the surface is to introduce the chlorosilane (liquid state) in the bottom of a flask and introduce the substrate inside and hermetically close it. Thus, due to surface tension of the trichlorosilane, chemical vapor deposition occurs at room temperature and react with the hydroxyl groups present at PC surface after plasma.

Different kinds of tests were performed on different surfaces (Table 4). The first observation is that the fluorosilane, *i.e.* Fsilane, functionalization results in an important modification of the wettability properties for the initial flat (no pillars) PC substrate. Indeed, by comparison with original PC, the contact angle with water reaches 105° after fluorination compared to 80° on original PC. Moreover, the more drastic effect is with hexadecane, from 5° to 80° after fluorination. This result proves that fluorinated species can bring to the surface some hydrophobic and oleophobic properties. When the textured surfaces are analyzed, all of them revealed an increase of hydrophobicity (+ 40 to 50°) and oleophobicity (+10°) by comparison with flat films.

Moreover, these results also highlight the importance of the ratio of diameter/height. Thus, the present highest performances obtained are around 130° and 90°, for contact angles with water and hexadecane, respectively, for sample with a PMMA concentration of 5wt% corresponding to a surface ratio of 0.33 and a d/h value of 2.6. However, the contact angle is slightly lower than the contact angle planed by Cassie Baxter model (140°), which indicates a partial penetration of water below the top of pillars.

**Table 4. Contact angle of water, ethylene glycol and hexadecane of different surfaces**

| Sample | ϕₛ | d/h | Water | Ethylene glycol | Hexadecane |
|---|---|---|---|---|---|
| PC | / | / | 80 | 56 | 5 |
| PC flat + FSilane | / | / | 105 | 83 | 80 |
| PC (5% PMMA) + FSilane (without ethanol washing) | 0.31 | 10 | 120 | 94 | 75 |
| PC (5% PMMA) + FSilane | 0.31 | 2.6 | 132 | 108 | 90 |
| PC (7.5% PMMA 10 min annealling) + FSilane | 0.33 | 2.3 | 118 | 102 | 72 |
| PC (7.5% PMMA 3h annealling) + FSilane | 0.21 | 1.6 | 130 | 116 | 81 |

Herein, it was proved that the nano pillars morphology strongly modifies the wettability properties of the surface.

### 3. Transparency

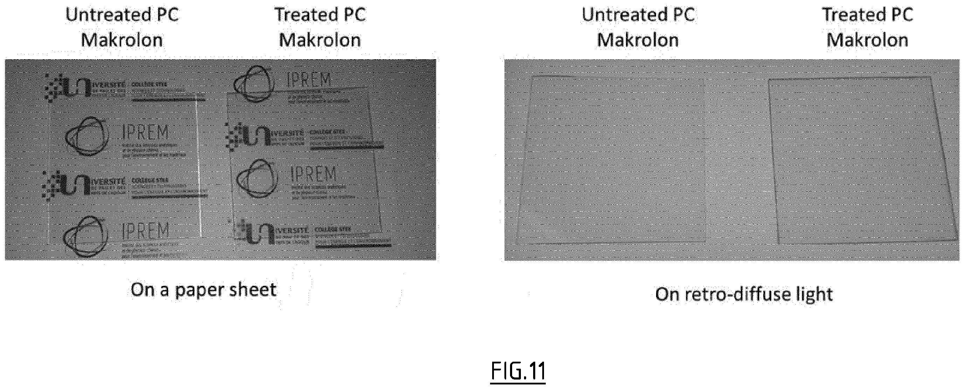

Modifying surface wettability on a transparent substrate or substrate with visual properties is an important challenge. Indeed, the main issue lies in the increase of light diffusion when some rough structuration is brought to the surface, leading to an increase of opacity or whitening, due to the increase of the interface area between surface and air coupled with different incidence angle. With the approach previously presented, two different categories of samples were identified.
- The first one, for the casting of 5 wt% solution of PMMA in PGMEA, without ethanol washing, for which the surface developed some pillars with a ratio d/h around 10. This sample is still transparent as it is shown in Figure 11 on a paper (left) and on retro diffuse light. However, when the film is washed with ethanol to remove species from PMMA degradation leading to the creation of higher pillars, the pattern dimension lead to a whitening of the sample, due to diffusion effect.
- The second category is with higher concentration of PMMA in PGMEA (7.5 wt %) which leads the formation of smaller pillars. This change of scale allows to avoid the light diffusion (dimension smaller than visible wavelength), so neither whitening nor turbidity appears on the sample. To confirm this macroscopic observation with eyes, UV measurement by following the light transmittance allowed to physically approve that different modification didn't affect the transparency of the sample in visible wavelength range.

This present invention thus gives a new way to obtain hydrophobic and oleophobic transparent surfaces by producing specific patterns, nano pillars, on the top surface of the sample.

Important points should be highlighted from the above results:
➢ The process according to the invention is a new and simple process to obtain nano pillars at the surface of a substrate.
➢ Pillars are made of the material substrate and not a top layer casted on it:
   this thus limits the risks of delamination.
➢ The transparency/visual aspect is kept after structuration treatment.
➢ Hydrophobicity and oleophobicity are highly increased after fluorination by CVD at room.

### REFERENCES

[1] D. Murakami, H. Jinnai, A. Takahara, Wetting transition from Cassie-Baxter to Wenzel states on textured surfaces, Langmuir. 30 (2000) 2-4. doi:10.1021/la4049067.
[2] S. Park, J. Kim, C.H. Park, Superhydrophobic textiles: Review of theoretical definitions, fabrication and functional evaluation, J. Eng. Fiber. Fabr. (2015). doi:10.1177/155892501501000401.
[3] S. Li, J. Huang, Z. Chen, G. Chen, Y. Lai, A review on special wettability textiles: theoretical models, fabrication technologies and multifunctional applications, J. Mater. Chem. A. (2017). doi:10.1039/c6ta07984a.
[4] U. Zulfiqar, M. Awais, S.Z. Hussain, I. Hussain, S.W. Husain, T. Subhani, Durable and self-healing superhydrophobic surfaces for building materials, Mater. Lett. (2017). doi:10.1016/j.matlet.2017.01.070.
[5] S.P. Dalawai, M.A. Saad Aly, S.S. Latthe, R. Xing, R.S. Sutar, S. Nagappan, C.S. Ha, K. Kumar Sadasivuni, S. Liu, Recent Advances in durability of superhydrophobic self-cleaning technology: A critical review, Prog. Org. Coatings. (2020). doi:10.1016/j.porgcoat.2019.105381.
[6] A. Mishra, N. Bhatt, Nanosilica based superhydrophobic coating for high efficient self cleaning solar panels, Indian J. Chem. Technol. (2019).
[7] Y.B. Park, H. Im, M. Im, Y.K. Choi, Self-cleaning effect of highly water-repellent microshell structures for solar cell applications, J. Mater. Chem. (2011). doi:10.1039/c0jm02463e.
[8] U. Mehmood, F.A. AI-Sulaiman, B.S. Yilbas, B. Salhi, S.H.A. Ahmed, M.K. Hossain, Superhydrophobic surfaces with antireflection properties for solar applications: A critical review, Sol. Energy Mater. Sol. Cells. (2016). doi:10.1016/j.solmat.2016.07.038.
[9] A.S. Sarkin, N. Ekren, 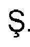 , Saǧlam, A review of anti-reflection and self-cleaning coatings on photovoltaic panels, Sol. Energy. (2020). doi:10.1016/j.solener.2020.01.084.
[10] J. Bruce Ralphin Rose, A Feasibility Study of Superhydrophobic Coating on AI6061 for Airplane Anti-icing Applications, in: Lect. Notes Mech. Eng., 2020. doi:10.1007/978-981-15-0124-1_144.
[11] M.J. Kreder, J. Alvarenga, P. Kim, J. Aizenberg, Design of anti-icing surfaces: Smooth, textured or slippery?, Nat. Rev. Mater. (2016). doi:10.1038/natrevmats.2015.3.
[12] E. Vazirinasab, R. Jafari, G. Momen, Application of superhydrophobic coatings as a corrosion barrier: A review, Surf. Coatings Technol. (2018). doi:10.1016/j.surfcoat.2017.11.053.
[13] A. Zaleska, Doped-TiO2: A Review, Recent Patents Eng. (2008). doi:10.2174/187221208786306289.
[14] S. Das, S. Kumar, S.K. Samal, S. Mohanty, S.K. Nayak, A Review on Superhydrophobic Polymer Nanocoatings: Recent Development and Applications, Ind. Eng. Chem. Res. (2018). doi:10.1021/acs.iecr.7b04887.
[15] G. Wen, Z. Guo, W. Liu, Biomimetic polymeric superhydrophobic surfaces and nanostructures: From fabrication to applications, Nanoscale. (2017). doi:10.1039/c7nr00096k.
[16] D. Kim, N.M. Pugno, S. Ryu, Wetting theory for small droplets on textured solid surfaces, ArXiV. (2016) 1-8. doi:10.1038/srep37813.
[17] G. Liu, Z. Yuan, Z. Qiu, S. Feng, Y. Xie, D. Leng, X. Tian, A brief review of bio-inspired surface technology and application toward underwater drag reduction, Ocean Eng. (2020). doi:10.1016/j.oceaneng.2020.106962.
[18] T. Darmanin, F. Guittard, Superhydrophobic and superoleophobic properties in nature, Mater. Today. (2015). doi:10.1016/j.mattod.2015.01.001.
[19] K. Du, Y. Jiang, Y. Liu, I. Wathuthanthri, C.H. Choi, Manipulation of the superhydrophobicity of plasma-etched polymer nanostructures, Micromachines. (2018). doi:10.3390/mi9060304.
[20] A. Telecka, T. Li, S. Ndoni, R. Taboryski, Nanotextured Si surfaces derived from block-copolymer self-assembly with superhydrophobic, superhydrophilic, or superamphiphobic properties, RSC Adv. (2018). doi:10.1039/c8ra00414e.
[21] H. Teisala, H.J. Butt, Hierarchical Structures for Superhydrophobic and Superoleophobic Surfaces, Langmuir. 35 (2019) 10689-10703. doi:10.1021/acs.langmuir.8b03088.
[22] U. Schulz, N. Kaiser, Controlled wetting of optical polymers by anti reflective structures and thin films, Vak. Forsch. Und Prax. (2009). doi:10.1002/vipr.200900395.
[23] F. Xia, L. Jiang, Bio-inspired, smart, multiscale interfacial materials, Adv. Mater. (2008). doi:10.1002/adma.200800836.
[24] M. Manca, A. Cannavale, L. De Marco, A.S. Aricò, R. Cingolani, G. Gigli, Durable superhydrophobic and antireflective surfaces by trimethylsilanized silica nanoparticles-based sol-gel processing, Langmuir. (2009). doi:10.1021/la804166t.
[25] B. Bhushan, E.K. Her, Fabrication of superhydrophobic surfaces with high and low adhesion inspired from rose petal, Langmuir. (2010). doi:10.1021/la904585j.
[26] R. Di Mundo, V. De Benedictis, F. Palumbo, R. d'Agostino, Fluorocarbon plasmas for nanotexturing of polymers: A route to water-repellent antireflective surfaces, Appl. Surf. Sci. (2009). doi:10.1016/j.apsusc.2008.09.020.
[27] F. Joki-Korpela, J. Karvinen, B. Päivänranta, A. Partanen, M. Suvanto, M. Kuittinen, T.T. Pakkanen, Hydrophobic and oleophobic anti-reflective polyacrylate coatings, Microelectron. Eng. (2014). doi:10.1016/j.mee.2013.09.010.
[28] S. Senthuran, C.W. Holzwarth, R.J. Blaikie, M.M. Alkaisi, Fabrication of sub-wavelength anti-reflective light trapping structures by maskless interference lithography, in: Conf. Rec. IEEE Photovolt. Spec. Conf., 2011. doi:10.1109/PVSC.2011.6186106.
[29] B. Athinarayanan, D.Y. Jeong, J.H. Kang, B.H. Koo, Fabrication of hydrophobic and anti-reflective polymeric films using anodic aluminum-oxide imprints, J. Korean Phys. Soc. (2015). doi:10.3938/jkps.67.1977.
[30] A.P. Ravishankar, M.A.J. Van Tilburg, F. Vennberg, D. Visser, S. Anand, Color generation from self-organized metalo-dielectric nanopillar arrays, Nanophotonics. (2019). doi:10.1515/nanoph-2019-0171.
[31] P. Nagarajan, K. Woo, D. Yao, Biomimetic surface microstructures and their replication to polymeric materials, in: Annu. Tech. Conf. - ANTEC, Conf. Proc., 2006.
[32] T. Sawitowski, N. Beyer, S. Wagener, F. Schulz, Nanostructuring of surfaces using anodic alumina masks - Methods, materials and properties, in: 2003 Nanotechnol. Conf. Trade Show - Nanotech 2003, 2003.
[33] S.J. Cho, T. An, G. Lim, Three-dimensionally designed anti-reflective silicon surfaces for perfect absorption of light, Chem. Commun. (2014). doi:10.1039/c4cc07341j.
[34] L. Wang, F. Clube, C. Dais, H.H. Solak, J. Gobrecht, Sub-wavelength printing in the deep ultra-violet region using Displacement Talbot Lithography, Microelectron. Eng. (2016). doi:10.1016/j.mee.2016.04.017.
[35] E. Martinelli, S. Agostini, G. Galli, E. Chiellini, A. Glisenti, M.E. Pettitt, M.E. Callow, J.A. Callow, K. Graf, F.W. Bartels, Nanostructured films of amphiphilic fluorinated block copolymers for fouling release application, Langmuir. (2008). doi:10.1021/la801991k.
[36] Y. He, C. Jiang, X. Cao, J. Chen, W. Tian, W. Yuan, Reducing ice adhesion by hierarchical micro-nano-pillars, Appl. Surf. Sci. (2014). doi:10.1016/j.apsusc.2014.03.139.
[37] W. Zhang, R. run Zhang, C. gang Jiang, C. wei Wu, Effect of pillar height on the wettability of micro-textured surface: Volume-of-fluid simulations, Int. J. Adhes. Adhes. (2017). doi:10.1016/j.ijadhadh.2016.12.011.
[38] S.B. Rananavare, M.K. Morakinyo, Use of sacrificial nanoparticles to remove the effects of shot-noise in contact holes fabricated by E-beam lithography, J. Vis. Exp. (2017). doi:10.3791/54551.
[39] D. Wang, A. Zhao, L. Li, Q. He, H. Guo, H. Sun, Q. Gao, Bioinspired ribbed hair arrays with robust superhydrophobicity fabricated by micro/nanosphere lithography and plasma etching, RSC Adv. (2015). doi:10.1039/c5ra18439h.
[40] C. Lee, K.-H. Han, K.-H. Kim, J.-J. Kim, Direct formation of nano-pillar arrays by phase separation of polymer blend for the enhanced out-coupling of organic light emitting diodes with low pixel blurring, Opt. Express. (2016). doi:10.1364/oe.24.00a488.
[41] L. Pessoni, J. De Winter, M. Surin, N. Hergué, N. Delbosc, R. Lazzaroni, P. Dubois, P. Gerbaux, O. Coulembier, Synthesis of Polyphthalaldehyde-Based Block Copolymers: Utilization of a Thermo-Sacrificial Segment for an Easy Access to Fine-Tuned Poly(3-hexylthiophene) Nanostructured Films, Macromolecules. (2016). doi:10.1021/acs.macromol.6b00283.
[42] A. Bertrand, A. Bousquet, C. Lartigau-Dagron, L. Billon, Hierarchically porous bio-inspired films prepared by combining "breath figure" templating and selectively degradable block copolymer directed self-assembly, Chem. Commun. (2016). doi:10.1039/c6cc04760b.
[43] A. Gharbi, R. Tiron, P. Pimenta Barros, M. Argoud, I. Servin, X. Chevalier, C. Nicolet, C. Navarro, PMMA removal options by wet development in PS- b -PMMA block copolymer for nanolithographic mask fabrication , J. Vac. Sci. Technol. B, Nanotechnol. Microelectron. Mater. Process. Meas. Phenom. (2015). doi:10.1116/1.4929548.
[44] L.T. Phan, S.M. Yoon, M.W. Moon, Plasma-based nanostructuring of polymers: A review, Polymers (Basel). (2017). doi:10.3390/polym9090417.
[45] V.M. Donnelly, A. Kornblit, Plasma etching: Yesterday, today, and tomorrow, J. Vac. Sci. Technol. A Vacuum, Surfaces, Film. (2013). doi:10.1116/1.4819316.
[46] G.S. Oehrlein, Reactive-ion Etching, Phys. Today. (1986). doi:10.1063/1.881066.

## Claims

1. A process for the surface modification of a polymer substrate comprising:
- a step for contacting a solution with the surface of a substrate made of a polymer A, said solution comprising a solvent S and a polymer B,
wherein the solvent S is able to solubilize both polymers A and B,
wherein polymers A and B are not miscible with each other,
wherein the difference between the solubility parameter of the polymer A and the solubility parameter of the polymer B is comprised from 0 to 10,
whereby a ternary blend comprising the solvent S, the polymer A, and the polymer B is obtained, and is present on top of the surface of the polymeric substrate,
- a step for eliminating the solvent S from the ternary blend as obtained above, whereby the surface of the polymer substrate is modified and is made of a micro-phased mixture of polymer A and of polymer B, and
- a step for eliminating the polymer B, in order to obtain a modified polymer substrate having nanopillars at its surface, said nanopillars being made of polymer A and having a diameter comprised from 10 nm to 5 µm.

2. The process of claim 1, further comprising a step of grafting at least one hydrophobic and/or oleophobic molecule on the modified surface of the polymer substrate, in order to obtain a modified polymer substrate having enhanced hydrophobic and/or oleophobic surface properties.

3. The process of claim 1 or 2, wherein the step for contacting the solution with the substrate surface is carried out by spin coating deposition, dip coating deposition or blade coating deposition.

4. The process of any one of claims 1 to 3, wherein the polymer A is selected from the group consisting of: polycarbonate (PC), poly(methyl methacrylate) (PMMA), and polystyrene (PS).

5. The process of any one of claims 1 to 4, wherein the polymer B is selected from the group consisting of: poly(methyl methacrylate) (PMMA), polylactic acid (PLA), and polystyrene (PS).

6. The process of any one of claims 1 to 5, wherein the solvent S is selected from the group consisting of: propylene glycol methyl ether acetate (PGMEA), and toluene.

7. The process of any one of claims 1 to 6, wherein the concentration of the polymer B in the solution is comprised from 0.1% to 20% by weight in relation to the total weight of the solution.

8. The process of any one of claims 1 to 7, wherein the duration of the step for contacting the solution with the substrate surface is comprised from 1 second to 30 minutes.

9. The process of any one of claims 1 to 8, wherein the step for eliminating the solvent S is carried out by heating and/or drying in vacuum the ternary blend.

10. The process of any one of claims 1 to 9, wherein the duration of the step for eliminating the solvent S is comprised from 30 seconds to 24 hours.

11. The process of any one of claims 1 to 10, wherein the step for eliminating the polymer B is carried out by a washing step, or by the combination of an etching step and a washing step.

12. The process of any one of claims 1 to 11, wherein the duration of the step for eliminating the polymer B is comprised from 1 second to 12 hours.

13. A polymer substrate made of a polymer A, having a modified polymeric surface comprising nanopillars, said nanopillars being made of polymer A, wherein the nanopilllars have a diameter comprised from 10 nm to 5 µm, and a height comprised from 10 nm to 10 µm.
